# EUROPEAN PATENT APPLICATION

(11) **EP 4 787 444 A1**
(43) Date of publication of application: **05.08.2026**
(21) Application number: 24871737.3
(22) Date of filing: 30.08.2024
(51) Int. Cl.: H01M 4/13, H01M 4/62

(54) **POSITIVE ELECTRODE AND BATTERY**

(30) Priority: 28.09.2023 JP 2023166815
(71) Applicant: Panasonic Intellectual Property Management Co., Ltd., Kadoma-shi, Osaka 571-0057 (JP)
(72) Inventor: YAMAMOTO Takao, Kadoma-shi, Osaka 571-0057 (JP); MASUMOTO Yui, Kadoma-shi, Osaka 571-0057 (JP)
(74) Representative: Eisenführ Speiser
(86) International application number: PCT/JP2024/031385
(87) International publication number: WO 2025/069937

(57) **Abstract**

A positive electrode 10 according to the present disclosure includes: a positive electrode current collector 1; and a positive electrode mixture layer 2 disposed on the positive electrode current collector 1, wherein the positive electrode mixture layer 2 includes a positive electrode active material and a solid electrolyte, the solid electrolyte includes a first solid electrolyte material and a second solid electrolyte material, the first solid electrolyte material has a higher ionic conductivity than the second solid electrolyte material, the positive electrode mixture layer 2 includes a plurality of layers stacked in a thickness direction, and when a first layer and a second layer among the plurality of layers are defined such that the first layer is closer to the positive electrode current collector 1 than the second layer, a ratio of a volume of the first solid electrolyte material to a volume of the solid electrolyte in the second layer is greater than a ratio of a volume of the first solid electrolyte material to a volume of the solid electrolyte in the first layer.

## Description

### TECHNICAL FIELD

The present disclosure relates to a positive electrode and a battery.

### BACKGROUND ART

In recent years, research and development of all-solid-state batteries using solid electrolytes have been actively conducted. In conventional batteries, a solid electrolyte may be decomposed by an active material. Decomposition of a solid electrolyte results in adverse effects on battery characteristics, such as a decrease in capacity.

Patent Literature 1 discloses a battery including a positive electrode, wherein the positive electrode includes a first solid electrolyte material that includes lithium, at least one selected from the group consisting of metalloid elements and metal elements other than lithium, and at least one selected from the group consisting of chlorine and bromine, and that does not include sulfur.

Patent Literature 2 discloses an all-solid-state battery including a current collector, a first electrode layer having a stacked structure composed of a plurality of mixture layers stacked, and a solid electrolyte layer in this order, wherein the volume ratio of an active material to a solid electrolyte in each of the mixture layers decreases at a specific gradient from the current collector side toward the solid electrolyte layer.

### CITATION LIST

### Patent Literature

Patent Literature 1: JP 7145439 B
Patent Literature 2: JP 6973310 B

### SUMMARY OF INVENTION

### Technical Problem

Conventional techniques leave room for improvement in achieving both output characteristics and high-temperature resistance.

### Solution to Problem

A positive electrode of the present disclosure includes:
a positive electrode current collector; and
a positive electrode mixture layer disposed on the positive electrode current collector, wherein
the positive electrode mixture layer includes a positive electrode active material and a solid electrolyte,
the solid electrolyte includes a first solid electrolyte material and a second solid electrolyte material,
the first solid electrolyte material has a higher ionic conductivity than the second solid electrolyte material,
the positive electrode mixture layer includes a plurality of layers stacked in a thickness direction, and
when a first layer and a second layer among the plurality of layers are defined such that the first layer is closer to the positive electrode current collector than the second layer, a ratio of a volume of the first solid electrolyte material to a volume of the solid electrolyte in the second layer is greater than a ratio of a volume of the first solid electrolyte material to a volume of the solid electrolyte in the first layer.

Furthermore, a positive electrode of the present disclosure includes:
a positive electrode current collector; and
a positive electrode mixture layer disposed on the positive electrode current collector, wherein
the positive electrode mixture layer includes a positive electrode active material and a solid electrolyte,
the solid electrolyte includes a first solid electrolyte material and a second solid electrolyte material,
the second solid electrolyte material has a higher oxidation potential than the first solid electrolyte material,
the positive electrode mixture layer includes a plurality of layers stacked in a thickness direction, and
when a first layer and a second layer among the plurality of layers are defined such that the first layer is closer to the positive electrode current collector than the second layer, a ratio of a volume of the first solid electrolyte material to a volume of the solid electrolyte in the second layer is greater than a ratio of a volume of the first solid electrolyte material to a volume of the solid electrolyte in the first layer.

### Advantageous Effects of Invention

According to the technique of the present disclosure, a battery that has both output characteristics and high-temperature resistance can be provided.

### BRIEF DESCRIPTION OF DRAWINGS

FIG. 1 is a cross-sectional view schematically showing the configuration of an example of a positive electrode according to Embodiment 1.
FIG. 2 is a cross-sectional view schematically showing the configuration of another example of the positive electrode according to Embodiment 1.
FIG. 3 is a cross-sectional view schematically showing the configuration of a battery 100 according to Embodiment 2.
FIG. 4 is a graph showing the initial discharge characteristics of batteries of Example 1 and Comparative Examples 1 to 3.
FIG. 5 is a graph showing the discharge voltage behavior of the batteries of Example 1 and Comparative Examples 1 to 3 at an SOC of 50%.
FIG. 6 is a graph showing changes in voltage caused by high-temperature storage of the batteries of Example 1 and Comparative Examples 1 to 3.

### DESCRIPTION OF EMBODIMENTS

Embodiments of the present disclosure are described below with reference to the drawings. The present disclosure is not limited to the following embodiments.

### (Embodiment 1)

A positive electrode according to Embodiment 1 includes a positive electrode current collector and a positive electrode mixture layer disposed on the positive electrode current collector. The positive electrode mixture layer includes a positive electrode active material and a solid electrolyte. The solid electrolyte includes a first solid electrolyte material and a second solid electrolyte material, and the first solid electrolyte material has a higher ionic conductivity than the second solid electrolyte material. The positive electrode mixture layer includes a plurality of layers stacked in the thickness direction, and when a first layer and a second layer among the plurality of layers are defined such that the first layer is closer to the positive electrode current collector than the second layer, the ratio of the volume of the first solid electrolyte material to the volume of the solid electrolyte in the second layer is greater than the ratio of the volume of the first solid electrolyte material to the volume of the solid electrolyte in the first layer.

In the present disclosure, the thickness direction refers to a stacking direction of the positive electrode mixture layer and the positive electrode current collector.

For example, the first layer and the second layer are adjacent to each other. That is, among the plurality of layers in the positive electrode mixture layer, two layers adjacent to each other may be such that the ratio of the volume of the first solid electrolyte material to the volume of the solid electrolyte in the layer farther from the positive electrode current collector is greater than the ratio of the volume of the first solid electrolyte material to the volume of the solid electrolyte in the layer closer to the positive electrode current collector.

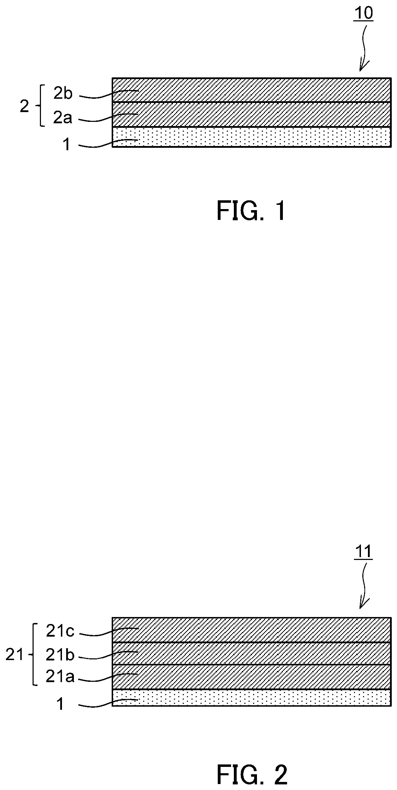

FIG. 1 is a cross-sectional view schematically showing the configuration of an example of the positive electrode according to Embodiment 1. A positive electrode 10 includes a positive electrode current collector 1 and a positive electrode mixture layer 2. The positive electrode mixture layer 2 includes a positive electrode active material (not illustrated) and a solid electrolyte (not illustrated). The solid electrolyte includes the first solid electrolyte material and the second solid electrolyte material, and the first solid electrolyte material has a higher ionic conductivity than the second solid electrolyte material. The positive electrode mixture layer 2 is composed of a layer 2a and a layer 2b that are stacked in the thickness direction. In the positive electrode 10 shown in FIG. 1, of these two layers adjacent to each other, the layer 2a closer to the positive electrode current collector 1 corresponds to the first layer, and the layer 2b farther from the positive electrode current collector 1 corresponds to the second layer. The ratio of the volume of the first solid electrolyte material to the volume of the solid electrolyte in the second layer is greater than the ratio of the volume of the first solid electrolyte material to the volume of the solid electrolyte in the first layer.

With the above configuration, the ionic conductivity of the positive electrode mixture layer 2 increases from the positive electrode current collector 1 side toward the side opposite to the positive electrode current collector 1. Accordingly, nonuniformity in lithium ion concentration in the thickness direction within the positive electrode mixture layer 2 during battery operation is suppressed, enabling a favorable lithium ion distribution. Therefore, the positive electrode according to Embodiment 1 can improve the output characteristics of the battery. Furthermore, the positive electrode according to Embodiment 1 can also improve the high-temperature resistance of the battery. In general, solid electrolyte materials tend to have reduced oxidation resistance with increasing ionic conductivity. However, the positive electrode according to Embodiment 1 includes the first solid electrolyte material and the second solid electrolyte material that satisfy the above relationship and thus has sufficient oxidation resistance, thereby enabling reduction of degradation of the battery caused by high-temperature storage.

In the positive electrode according to Embodiment 1, the second solid electrolyte material may have a higher oxidation potential than the first solid electrolyte material.

In another aspect, the present disclosure provides a positive electrode 10 including:
a positive electrode current collector 1; and
a positive electrode mixture layer 2 disposed on the positive electrode current collector 1, wherein
the positive electrode mixture layer 2 includes a positive electrode active material and a solid electrolyte,
the solid electrolyte includes a first solid electrolyte material and a second solid electrolyte material,
the second solid electrolyte material has a higher oxidation potential than the first solid electrolyte material,
the positive electrode mixture layer 2 includes a plurality of layers stacked in a thickness direction, and
when a first layer (layer 2a) and a second layer (layer 2b) among the plurality of layers are defined such that the first layer is closer to the positive electrode current collector 1 than the second layer, a ratio of a volume of the first solid electrolyte material to a volume of the solid electrolyte in the second layer is greater than a ratio of a volume of the first solid electrolyte material to a volume of the solid electrolyte in the first layer.

With the above configuration, nonuniformity in lithium ion concentration in the thickness direction within the positive electrode mixture layer 2 during battery operation is suppressed, enabling a favorable lithium ion distribution. Therefore, the positive electrode according to Embodiment 1 can achieve a battery having improved output characteristics.

The positive electrode of the present disclosure is used, for example, in an all-solid-state battery. That is, the positive electrode may be a positive electrode for an all-solid-state battery.

The ratio of the volume of the first solid electrolyte material to the volume of the solid electrolyte in the first layer is a value determined from (volume of first solid electrolyte material present in first layer)/(volume of solid electrolyte present in first layer) × 100 [%]. The ratio of the volume of the first solid electrolyte material to the volume of the solid electrolyte in the second layer is likewise a value determined from (volume of first solid electrolyte material present in second layer)/(volume of solid electrolyte present in second layer) × 100 [%].

The ratio of the volume of the first solid electrolyte material to the volume of the solid electrolyte in the first layer and the ratio of the volume of the first solid electrolyte material to the volume of the solid electrolyte in the second layer can be determined, respectively, based on the proportions of detected elements of the solid electrolyte in the first layer and the second layer, obtained through elemental mapping analysis, such as scanning electron microscopy (SEM) or energy-dispersive X-ray spectroscopy (EDS), on a cross section of the positive electrode mixture layer 2 cut along the thickness direction.

The solid electrolyte may consist of the first solid electrolyte material and the second solid electrolyte material. In this case, the ratio of the volume of the first solid electrolyte material to the volume of the solid electrolyte is the ratio of the volume of the first solid electrolyte material to the total of the volume of the first solid electrolyte material and the volume of the second solid electrolyte material.

The ratio of the volume of the first solid electrolyte material to the volume of the solid electrolyte in the first layer may be 0% or more and 50% or less, or 0% or more and 30% or less. The ratio of the volume of the first solid electrolyte material to the volume of the solid electrolyte in the second layer may be 50% or more and 100% or less, or 70% or more and 100% or less.

The configuration of the positive electrode may be such that the ratio of the volume of the first solid electrolyte material to the volume of the solid electrolyte in the first layer is 0% or more and 50% or less, and the ratio of the volume of the first solid electrolyte material to the volume of the solid electrolyte in the second layer is 50% or more and 100% or less.

The positive electrode mixture layer 2 may be composed of only two layers in the thickness direction. That is, the positive electrode mixture layer 2 may be composed of only the first layer and the second layer described above.

The configuration of the positive electrode may be such that the positive electrode mixture layer 2 is composed of only two layers in the thickness direction, and the ratio of the volume of the first solid electrolyte material to the volume of the solid electrolyte in the first layer is 0% or more and 50% or less, and the ratio of the volume of the first solid electrolyte material to the volume of the solid electrolyte in the second layer is 50% or more and 100% or less.

The ratio of the volume of the second solid electrolyte material to the volume of the solid electrolyte in the first layer may be 50% or more and 100% or less, or 70% or more and 100% or less. The ratio of the volume of the second solid electrolyte material to the volume of the solid electrolyte in the second layer may be 0% or more and 50% or less, or 0% or more and 30% or less.

Examples of the solid electrolyte include a halide solid electrolyte, a sulfide solid electrolyte, an oxide solid electrolyte, and an organic polymer solid electrolyte. In the present disclosure, the "halide solid electrolyte" means a solid electrolyte containing a halogen element and being free of sulfur. The "sulfide solid electrolyte" means a solid electrolyte containing sulfur. The "oxide solid electrolyte" means a solid electrolyte containing oxygen. The halide solid electrolyte may contain oxygen in addition to the halogen element. The oxide solid electrolyte may contain an anion other than oxygen (excluding sulfur anions and halogen anions).

The halide solid electrolyte is, for example, a compound containing Li, M, and X, where M is at least one selected from the group consisting of metalloid elements and metal elements other than Li, and X is at least one selected from the group consisting of F, Cl, Br, and I.

The "metalloid elements" refer to B, Si, Ge, As, Sb, and Te. The "metal elements" refer to all the elements included in Groups 1 to 12 of the periodic table (except hydrogen) and all the elements included in Groups 13 to 16 of the periodic table (except B, Si, Ge, As, Sb, Te, C, N, P, O, S, and Se).

M may include Ti. M may include Ti and Al. According to the above, the oxidation resistance of the halide solid electrolyte can be enhanced.

M may include Y. M may be Y. According to the above, the ionic conductivity of the halide solid electrolyte can be enhanced. Accordingly, the output of the battery can be enhanced.

The halide solid electrolyte may be, for example, a compound represented by LiₐMe_{b}Y_{c}X₆, where mathematical relations a + mb + 3c = 6 and c > 0 are satisfied, and the value of m represents the valence of Me. The value of b may be 0.

Me may be at least one selected from the group consisting of Mg, Ca, Sr, Ba, Zn, Sc, Al, Ga, Bi, Zr, Hf, Ti, Sn, Ta, and Nb.

X may include at least one selected from the group consisting of Cl and Br.

Examples of the sulfide solid electrolyte include Li₂S-P₂S₅, Li₂S-SiS₂, Li₂S-B₂S₃, Li₂S-GeS₂, Li₂S-SiS₂-LiI, Li₂S-SiS₂-Li₃PO₄, Li₂S-Ge₂S₂, Li₂S-GeS₂-P₂S₅, and Li₂S-GeS₂-ZnS.

The oxide solid electrolyte can be, for example, a NASICON-type solid electrolyte material typified by LiTi₂(PO₄)₃ and element-substituted substances thereof, a (LaLi)TiO₃-based perovskite-type solid electrolyte material, a LISICON-type solid electrolyte material typified by Li₁₄ZnGe₄O₁₆, Li₄SiO₄, and LiGeO₄ and element-substituted substances thereof, a garnet-type solid electrolyte material typified by Li₇La₃Zr₂O₁₂ and element-substituted substances thereof, Li₃PO₄ and N-substituted substances thereof, or a glass or glass-ceramic based on a Li-B-O compound, such as LiBO₂ or Li₃BO₃, to which Li₂SO₄, Li₂CO₃, or the like is added.

The organic polymer solid electrolyte can be, for example, a compound of a polymer compound and a lithium salt. The polymer compound may have an ethylene oxide structure. The polymer compound having an ethylene oxide structure can contain a large amount of a lithium salt. Accordingly, the ionic conductivity can be further enhanced. The lithium salt can be LiPF₆, LiBF₄, LiSbF₆, LiAsF₆, LiSO₃CF₃, LiN(SO₂F)₂, LiN(SO₂CF₃)₂, LiN(SO₂C₂F₅)₂, LiN(SO₂CF₃)(SO₂C₄F₉), LiC(SO₂CF₃)₃, or the like. One lithium salt may be used alone, or two or more lithium salts may be used in combination.

The first solid electrolyte material and the second solid electrolyte material may each be a halide solid electrolyte.

The first solid electrolyte material may be a compound represented by LiₐMe_{b}Y_{c}X₆ described above. The first solid electrolyte material may be a compound consisting of Li, Y, and X. The first solid electrolyte material may be a compound consisting of Li, Y, Br, and Cl, and may be Li₃YBr₃Cl₃.

The second solid electrolyte material may be a compound consisting of Li, Ti, Al, and F or a compound consisting of Li, Y, and Cl. The second solid electrolyte material may be Li₃YCl₆.

The ionic conductivity of the first solid electrolyte material at 25°C may be 0.01 mS/cm or more and 20 mS/cm or less, 0.1 mS/cm or more and 15 mS/cm or less, or 1 mS/cm or more and 10 mS/cm or less.

The ionic conductivity of the second solid electrolyte material at 25°C may be 0.001 mS/cm or more and 10 mS/cm or less, 0.005 mS/cm or more and 5 mS/cm or less, or 0.01 mS/cm or more and 1 mS/cm or less.

The difference in ionic conductivity at 25°C between the first solid electrolyte material and the second solid electrolyte may be 0.1 mS/cm or more, 0.5 mS/cm or more, 1 mS/cm or more, or 1.5 mS/cm or more. The upper limit of the difference may be, for example, 10 mS/cm or less.

The oxidation potential of the first solid electrolyte material versus Li/Li⁺ may be 2.5 V or more and 4.5 V or less, or 3.0 V or more and 4.0 V or less.

The oxidation potential of the second solid electrolyte material versus Li/Li⁺ may be 3.5 V or more and 5.5 V or less, or 3.9 V or more and 5.0 V or less.

The difference in oxidation potential versus Li/Li⁺ between the first solid electrolyte material and the second solid electrolyte may be 0.1 V or more and 3.0 V or less, or 0.5 V or more and 1.5 V or less.

The positive electrode active material can be a material capable of occluding and releasing lithium ions. The positive electrode active material can be a lithium-containing transition metal oxide, a lithium-containing transition metal phosphate, a transition metal fluoride, a polyanion material, a fluorinated polyanion material, a transition metal sulfide, a transition metal oxysulfide, a transition metal oxynitride, or the like. In particular, when a lithium-containing transition metal oxide or a lithium-containing transition metal phosphate is used as the positive electrode active material, the battery can be manufactured at a reduced cost and exhibit an increased average discharge voltage. Examples of lithium-containing transition metal oxides include lithium cobalt oxide, lithium nickel cobalt aluminum oxide, lithium nickel cobalt manganese oxide, and lithium nickel manganese oxide. Examples of lithium-containing transition metal phosphates include lithium iron phosphate, lithium vanadium phosphate, lithium cobalt phosphate, and lithium nickel phosphate.

The positive electrode active material may include a lithium nickel oxide having a layered rock salt-type crystal structure. The proportion of Ni among metal elements excluding Li that are contained in the lithium nickel oxide may be 50 at% or more. The lithium nickel oxide may include other transition metals. Lithium nickel oxides are useful for achieving a high operating voltage.

The lithium nickel oxide may be represented by the following composition formula (I). An element M1 is at least one selected from the group consisting of V, Co, and Mn. An element M2 is at least one selected from the group consisting of Mg, Al, Ca, Ti, Cu, Zn, and Nb. The composition formula (I) satisfies 0.9 ≤ α ≤ 1.10, -0.05 ≤ β ≤ 0.05, 0.5 ≤ x1 < 1, 0 ≤ x2 ≤ 0.5, and 0 < 1 - x1 - x2 ≤ 0.5.

Li_{α}Niₓ₁M1ₓ₂M2₍₁₋ₓ₁₋ₓ₂₎O_{2+β} (I)

The positive electrode mixture layer 2 may further include other materials such as a conductive additive and a binder.

The conductive additive is used to reduce the resistance of the positive electrode 10. Examples of the conductive additive include a carbon material and a conductive polymer compound. Examples of carbon materials include carbon black, graphite, acetylene black, carbon nanotubes, carbon nanofibers, graphene, fullerenes, and graphite oxide. Examples of conductive polymer compounds include polyaniline, polypyrrole, and polythiophene.

The binder is used to enhance the binding properties of the materials constituting the positive electrode 10. The binder can be a polymer material such as polyvinylidene fluoride, a vinylidene fluoride-hexafluoropropylene copolymer, a vinylidene fluoride-tetrafluoroethylene copolymer, polytetrafluoroethylene, carboxymethylcellulose, polyacrylic acid, styrene-butadiene copolymer rubber, polypropylene, polyethylene, or polyimide.

The positive electrode current collector 1 can be a sheet or film formed of a metal material such as aluminum, stainless steel, titanium, or an alloy of any of these. Aluminum and alloys thereof are inexpensive and can be easily formed into thin films, and are accordingly suitable as materials of the positive electrode current collector 1. The sheet or film may be porous or nonporous. The sheet or film is metal foil, metal mesh, or the like. A carbon material, such as carbon, may be applied as a conductive auxiliary material onto the surface of the positive electrode current collector 1.

The ratio "v1:100 - v1" between the volume of the positive electrode active material and the sum of the volume of the solid electrolyte in the positive electrode 10 may satisfy 30 ≤ v1 ≤ 95. Here, v1 represents the volume ratio of the positive electrode active material when the sum of the volumes of the positive electrode active material and the solid electrolyte included in the positive electrode is taken as 100. When 30 ≤ v1 is satisfied, sufficient energy density of the battery can be easily ensured. When v1 ≤ 95 is satisfied, high-output operation of the battery is further facilitated.

The positive electrode 10 may have a thickness of 10 µm or more and 500 µm or less. When the positive electrode 10 has a thickness of 10 µm or more, sufficient energy density of the battery 100 is ensured. When the positive electrode 10 has a thickness of 500 µm or less, high-output operation of the battery can be performed.

In FIG. 1, the positive electrode mixture layer 2 is composed of the layer 2a and the layer 2b; however, the configuration of the positive electrode of the present disclosure is not limited to the above. The positive electrode mixture layer may include three or more layers. When the number of layers included in the positive electrode mixture layer is k, for example, an n-th layer and an (n+1)-th layer counted from the positive electrode current collector side can correspond to the first layer and the second layer, respectively. Here, k is a natural number equal to or greater than 2, and n is a natural number satisfying 1 ≤ n ≤ k - 1.

The plurality of layers in the positive electrode mixture layer may be stacked in ascending order of the ratio of the volume of the first solid electrolyte material to the volume of the solid electrolyte in each of the plurality of layers, from the layer closest to the positive electrode current collector among the plurality of layers to the layer farthest from the positive electrode current collector among the plurality of layers.

FIG. 2 is a cross-sectional view schematically showing the configuration of another example of the positive electrode according to Embodiment 1. A positive electrode 11 includes the positive electrode current collector 1 and a positive electrode mixture layer 21, and the positive electrode mixture layer 21 includes a layer 21a, a layer 21b, and a layer 21c in the thickness direction. That is, the positive electrode 11 is an example in which the number of layers included in the positive electrode mixture layer, k, is 3.

In the positive electrode 11, the ratio of the volume of the first solid electrolyte material to the volume of the solid electrolyte in each of the layers in the positive electrode mixture layer 21 may increase in the order: layer 21a < layer 21b < layer 21c.

The positive electrode according to Embodiment 1 can be manufactured, for example, by the following method. A positive electrode mixture for first layer formation is prepared by mixing the second solid electrolyte material and the positive electrode active material, and a positive electrode mixture for second layer formation is prepared by mixing the first solid electrolyte material and the positive electrode active material. The positive electrode mixture for first layer formation and the positive electrode mixture for second layer formation are stacked in this order on the positive electrode current collector 1 and pressed. Thus, a positive electrode including the positive electrode current collector 1 and the positive electrode mixture layer 2 is obtained.

The method for manufacturing the positive electrode is not limited to the above. For example, the positive electrode may be obtained by stacking and pressing the positive electrode mixture for first layer formation and the positive electrode mixture for second layer formation to form the positive electrode mixture layer 2 including the first layer and the second layer, and then disposing the positive electrode current collector 1 on the first layer.

The positive electrode mixture for first layer formation may be one in which the first solid electrolyte material, the second solid electrolyte material, and the positive electrode active material are mixed such that the second solid electrolyte material has a higher volume proportion than the first solid electrolyte material. The positive electrode mixture for second layer formation may be one in which the first solid electrolyte material, the second solid electrolyte material, and the positive electrode active material are mixed such that the first solid electrolyte material has a higher volume proportion than the second solid electrolyte material. Even when the positive electrode mixture layer 2 includes three or more layers, a battery can be fabricated by sequentially stacking positive electrode mixtures in which the volume ratio between the first solid electrolyte material and the second solid electrolyte material is adjusted from layer to layer.

### (Embodiment 2)

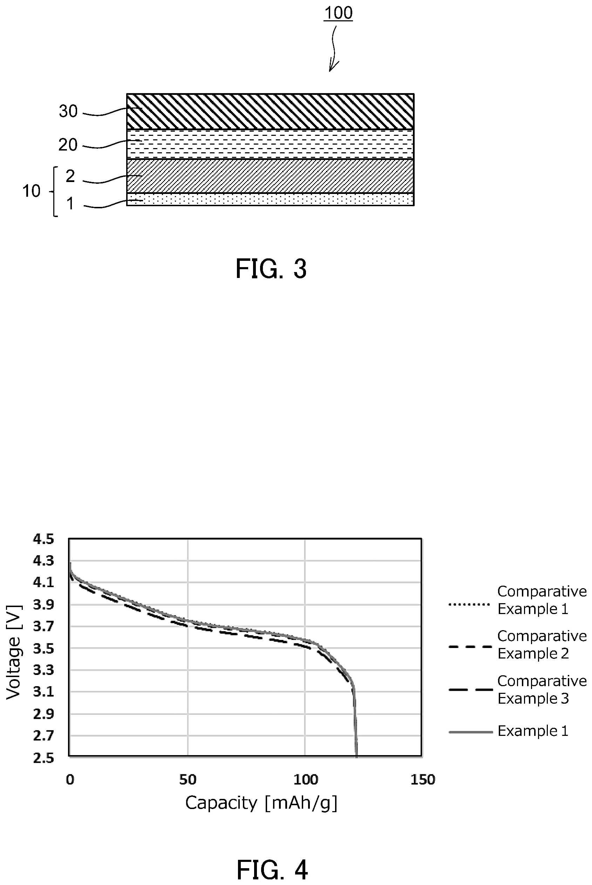

FIG. 3 is a cross-sectional view schematically showing the configuration of a battery 100 according to Embodiment 2.

The battery 100 includes the positive electrode 10, an electrolyte layer 20, and a negative electrode 30. The electrolyte layer 20 is provided between the positive electrode 10 and the negative electrode 30.

The positive electrode 10 is the positive electrode according to Embodiment 1.

By including the positive electrode according to Embodiment 1, the output characteristics of the battery are enhanced.

The electrolyte layer 20 is a layer that includes an electrolyte. The electrolyte is, for example, a solid electrolyte. The electrolyte layer 20 may be a solid electrolyte layer.

As the solid electrolyte included in the electrolyte layer 20, the solid electrolytes exemplified in Embodiment 1 can be used.

The electrolyte layer 20 may include a solid electrolyte having the same composition as the composition of the first solid electrolyte material or the second solid electrolyte material, each of which is included in the positive electrode mixture layer 2 of Embodiment 1. The electrolyte layer 20 may include, as the solid electrolyte, a material having the same composition as the composition of the first solid electrolyte material. The electrolyte layer 20 may include a solid electrolyte having a composition different from the compositions of the first solid electrolyte material and the second solid electrolyte material included in the positive electrode mixture layer of Embodiment 1.

The electrolyte layer 20 may include two or more of the materials exemplified as the solid electrolyte. The two or more solid electrolytes have compositions different from each other. For example, the electrolyte layer 20 may include a halide solid electrolyte and a sulfide solid electrolyte.

The electrolyte layer 20 may have a thickness of 1 µm or more and 300 µm or less. When the electrolyte layer 20 has a thickness of 1 µm or more, a short circuit between the positive electrode 10 and the negative electrode 30 is less likely to occur. Furthermore, when the electrolyte layer 20 has a thickness of 300 µm or less, high-output operation of the battery 100 is facilitated. That is, when the thickness of the electrolyte layer 20 is appropriately adjusted, sufficient safety of the battery 100 can be ensured and high-output operation of the battery 100 can be performed.

The negative electrode 30 includes a material having properties of occluding and releasing metal ions (e.g., lithium ions). The negative electrode 30 includes, for example, a negative electrode active material (e.g., negative electrode active material particles).

The negative electrode active material can be a metal material, a carbon material, an oxide, a nitride, a tin compound, a silicon compound, or the like. The metal material may be a simple substance of metal. The metal material may be an alloy. Examples of the metal material include lithium metal and a lithium alloy. Examples of the carbon material include natural graphite, coke, partially graphitized carbon, carbon fiber, spherical carbon, artificial graphite, and amorphous carbon. Examples of the oxide include Li₄Ti₅O₁₂, LiTi₂O₄, and TiO₂. From the viewpoint of capacity density, silicon, tin, a silicon compound, or a tin compound can be suitably used.

The negative electrode 30 may include a negative electrode current collector and a negative electrode mixture layer supported on the surface of the negative electrode current collector. The negative electrode mixture layer may include the negative electrode active material.

The negative electrode mixture layer may further include a solid electrolyte. With such a configuration, the lithium-ion conductivity within the negative electrode 30 is enhanced, enabling high-output operation of the battery 100. As the solid electrolyte that can be included in the negative electrode mixture layer, the solid electrolytes exemplified in Embodiment 1 can be used.

The negative electrode current collector is, for example, a foil formed of a metal material such as stainless steel, nickel, a nickel alloy, copper, or a copper alloy.

The ratio "v2:100 - v2" between the volume of the negative electrode active material and the volume of the solid electrolyte in the negative electrode 30 may satisfy 30 ≤ v2 ≤ 95. Here, v2 represents the volume ratio of the negative electrode active material when the sum of the volumes of the negative electrode active material and the solid electrolyte included in the negative electrode 30 is taken as 100. When 30 ≤ v2 is satisfied, sufficient energy density of the battery 100 can be easily ensured. When v2 ≤ 95 is satisfied, high-output operation of the battery 100 is further facilitated.

The negative electrode 30 may have a thickness of 10 µm or more and 500 µm or less. When the negative electrode 30 has a thickness of 10 µm or more, sufficient energy density of the battery 100 is facilitated. When the negative electrode 30 has a thickness of 500 µm or less, high-output operation of the battery 100 is further facilitated.

At least one selected from the group consisting of the positive electrode 10, the electrolyte layer 20, and the negative electrode 30 may include a binder for the purpose of enhancing the adhesion between the particles. The binder is used to enhance the binding properties of the materials constituting the electrode. Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrene-butadiene rubber, and carboxymethylcellulose. Moreover, the binder can be a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. Furthermore, the binder may be a mixture of two or more selected from these materials.

At least one of the positive electrode 10 and the negative electrode 30 may include a conductive additive for the purpose of enhancing electronic conductivity. The conductive additive can be, for example, graphite, such as natural graphite or artificial graphite; carbon black, such as acetylene black or Ketjenblack; a conductive fiber, such as a carbon fiber or a metal fiber; fluorinated carbon; a metal powder, such as aluminum powder; a conductive whisker, such as a zinc oxide whisker or a potassium titanate whisker; a conductive metal oxide, such as titanium oxide; or a conductive polymer compound, such as a polyaniline, polypyrrole, or polythiophene compound. For example, when a conductive carbon additive is used, cost reduction of the battery 100 can be achieved.

The battery 100 can be configured as a battery in any of various forms such as a coin type, a cylindrical type, a prismatic type, a sheet type, a button type, a flat type, and a stacked type.

The battery 100 can be manufactured, for example, by the following method. Materials for forming the positive electrode 10, materials for forming the electrolyte layer 20, and materials for forming the negative electrode 30 are each prepared. A stack is fabricated by a known method, in which the positive electrode 10, the electrolyte layer 20, and the negative electrode 30 are disposed in this order. At this time, the positive electrode 10 is produced, for example, by the method described above in Embodiment 1. Thus, the battery 100 is obtained.

### (Other Embodiments)

### (Supplementary Description)

From the description of the above embodiments, the following techniques are disclosed.

### (Technique 1)

A positive electrode including:
a positive electrode current collector; and
a positive electrode mixture layer disposed on the positive electrode current collector, wherein
the positive electrode mixture layer includes a positive electrode active material and a solid electrolyte,
the solid electrolyte includes a first solid electrolyte material and a second solid electrolyte material,
the first solid electrolyte material has a higher ionic conductivity than the second solid electrolyte material,
the positive electrode mixture layer includes a plurality of layers stacked in a thickness direction, and
when a first layer and a second layer among the plurality of layers are defined such that the first layer is closer to the positive electrode current collector than the second layer, a ratio of a volume of the first solid electrolyte material to a volume of the solid electrolyte in the second layer is greater than a ratio of a volume of the first solid electrolyte material to a volume of the solid electrolyte in the first layer.

With this configuration, a battery that has both output characteristics and high-temperature resistance can be achieved.

### (Technique 2)

The positive electrode according to Technique 1, wherein the second solid electrolyte material has a higher oxidation potential than the first solid electrolyte material. With such a configuration, a battery that has both output characteristics and high-temperature resistance can be achieved.

### (Technique 3)

A positive electrode including:
a positive electrode current collector; and
a positive electrode mixture layer disposed on the positive electrode current collector, wherein
the positive electrode mixture layer includes a positive electrode active material and a solid electrolyte,
the solid electrolyte includes a first solid electrolyte material and a second solid electrolyte material,
the second solid electrolyte material has a higher oxidation potential than the first solid electrolyte material,
the positive electrode mixture layer includes a plurality of layers stacked in a thickness direction, and
when a first layer and a second layer among the plurality of layers are defined such that the first layer is closer to the positive electrode current collector than the second layer, a ratio of a volume of the first solid electrolyte material to a volume of the solid electrolyte in the second layer is greater than a ratio of a volume of the first solid electrolyte material to a volume of the solid electrolyte in the first layer.

With this configuration, a battery that has both output characteristics and high-temperature resistance can be achieved.

### (Technique 4)

The positive electrode according to any one of Techniques 1 to 3, wherein the ratio of the volume of the first solid electrolyte material to the volume of the solid electrolyte in the first layer is 0% or more and 50% or less, and the ratio of the volume of the first solid electrolyte material to the volume of the solid electrolyte in the second layer is 50% or more and 100% or less. With such a configuration, a battery that has both output characteristics and high-temperature resistance can be achieved.

### (Technique 5)

The positive electrode according to any one of Techniques 1 to 4, wherein the first layer and the second layer are adjacent to each other. With such a configuration, a battery that has both output characteristics and high-temperature resistance can be achieved.

### (Technique 6)

The positive electrode according to any one of Techniques 1 to 5, wherein the plurality of layers are stacked in ascending order of the ratio of the volume of the first solid electrolyte material to the volume of the solid electrolyte in each of the plurality of layers, from a layer closest to the positive electrode current collector among the plurality of layers to a layer farthest from the positive electrode current collector among the plurality of layers. With such a configuration, a battery that has both output characteristics and high-temperature resistance can be achieved.

### (Technique 7)

A battery including:
the positive electrode according to any one of Techniques 1 to 6;
a negative electrode; and
an electrolyte layer disposed between the positive electrode and the negative electrode.

The battery according to Technique 7 can have enhanced output characteristics and high-temperature resistance.

### Examples

The present disclosure is described in more detail below with reference to examples. The following examples are merely illustrative of one embodiment and are not intended to limit the present disclosure.

### <Fabrication of Battery>

### (Example 1)

### [Preparation of First Solid Electrolyte Material]

In an argon atmosphere, raw material powders LiBr, YBr₃, LiCl, and YCl₃ were weighed in a molar ratio of LiBr:YBr₃:LiCl:YCl₃ = 3:1:3:1. Thereafter, a milling process was performed using a planetary ball mill (Model P-7, manufactured by Fritsch GmbH) for 25 hours at 600 rpm, whereby a powder of Li₃YBr₃Cl₃ was obtained as the first solid electrolyte material. The ionic conductivity of the first solid electrolyte material measured at 25°C was 2 mS/cm. The oxidation potential of the first solid electrolyte material was 3.6 V (vs. Li⁺/Li).

### [Preparation of Second Solid Electrolyte Material]

In an argon atmosphere, raw material powders LiBr, YBr₃, LiCl, and YCl₃ were weighed in a molar ratio of LiCl:YCl₃ = 3:1. Thereafter, a milling process was performed using a planetary ball mill (Model P-7, manufactured by Fritsch GmbH) for 25 hours at 600 rpm, whereby a powder of Li₃YCl₆ was obtained as the second solid electrolyte material. The ionic conductivity of the second solid electrolyte material measured at 25°C was 0.2 mS/cm. The oxidation potential of the second solid electrolyte material was 4.3 V (vs. Li⁺/Li).

### [Preparation of Positive Electrode Mixture]

A positive electrode active material LiNi_{0.6}Co_{0.2}Mn_{0.2}O₂, the first solid electrolyte material, and vapor-grown carbon fibers (VGCF (manufactured by Resonac Corporation)) serving as the conductive additive were weighed in a mass ratio of 60:40:1 and mixed in a mortar, whereby a first positive electrode mixture was prepared. VGCF is a registered trademark of Resonac Corporation.

The positive electrode active material LiNi_{0.6}Co_{0.2}Mn_{0.2}O₂, the second solid electrolyte material, and VGCF were weighed in a mass ratio of 60:40:1 and mixed in a mortar, whereby a second positive electrode mixture was prepared.

### [Fabrication of Battery]

A negative electrode active material Li₄Ti₅O₁₂, Li₃YBr₃Cl₃, and VGCF were weighed in a mass ratio of 60:40:1 and mixed in a mortar, whereby a negative electrode mixture was prepared.

In an insulating outer cylinder, 15 mg of Li₃YBr₃Cl₃, 9 mg of the first positive electrode mixture, and 9 mg of the second positive electrode mixture were stacked in this order, followed by pressure-forming at a pressure of 360 MPa, whereby a solid electrolyte layer and a positive electrode mixture layer were formed. Next, 3 mg of VGCF was stacked on the layer of the second positive electrode mixture, that is, the positive electrode mixture layer, followed by pressure-forming at a pressure of 360 MPa, whereby a positive electrode was formed. Next, 18 mg of the negative electrode mixture was stacked on the layer of Li₃YBr₃Cl₃, that is, the solid electrolyte layer, followed by pressure-forming at a pressure of 360 MPa. Thus, a stack composed of the positive electrode, the solid electrolyte, and the negative electrode was fabricated. Next, stainless steel current collectors were attached to the positive electrode and the negative electrode, and current collector leads were provided on the current collectors. Finally, an insulating ferrule was used to isolate the inside of the insulating outer cylinder from the external atmosphere to hermetically seal the cylinder. Thus, the battery of Example 1 was fabricated.

### (Comparative Example 1)

### [Preparation of Positive Electrode Mixture]

The positive electrode active material LiNi_{0.6}Co_{0.2}Mn_{0.2}O₂, the first solid electrolyte material, and VGCF were weighed in a mass ratio of 60:40:1 and mixed in a mortar, whereby the positive electrode mixture of Comparative Example 1 was prepared.

### [Fabrication of Battery]

In an insulating outer cylinder, 15 mg of Li₃YBr₃Cl₃ and 18 mg of the positive electrode mixture of Comparative Example 1 were sequentially stacked, followed by pressure-forming at a pressure of 360 MPa, whereby a solid electrolyte layer and a positive electrode mixture layer were formed. Next, 3 mg of VGCF was stacked on the positive electrode mixture layer, followed by pressure-forming at a pressure of 360 MPa, whereby a positive electrode was formed. The subsequent procedure was followed in the same manner as in Example 1 to fabricate the battery of Comparative Example 1.

### (Comparative Example 2)

### [Preparation of Positive Electrode Mixture]

The positive electrode active material LiNi_{0.6}Co_{0.2}Mn_{0.2}O₂, the first solid electrolyte material, the second solid electrolyte material, and VGCF were weighed in a mass ratio of 60:20:20:1 and mixed in a mortar, whereby the positive electrode mixture of Comparative Example 2 was prepared.

### [Fabrication of Battery]

The battery of Comparative Example 2 was fabricated by the same procedure as in Comparative Example 1, except that the positive electrode mixture of Comparative Example 2 was used for preparing the positive electrode mixture layer.

### (Comparative Example 3)

The battery of Comparative Example 3 was fabricated by the same procedure as in Example 1, except that 15 mg of Li₃YBr₃Cl₃, 9 mg of the second positive electrode mixture, and 9 mg of the first positive electrode mixture were stacked in this order, specifically, the order of stacking the first positive electrode mixture and the second positive electrode mixture was reversed from that in Example 1.

### <Charge and Discharge Test>

A charge and discharge test was conducted on the batteries of Example 1 and Comparative Examples 1 to 3 under the following conditions. At 25°C, a constant-current charge was performed at a current value of 0.0016 A equivalent to a 1C rate relative to the theoretical capacity of the battery until 4.3 V was reached. Next, a constant-current discharge was performed at a current value of 0.0016 A equivalent to a 1C rate until 2.5 V was reached. FIG. 4 is a graph showing the initial discharge characteristics of the batteries of Example 1 and Comparative Examples 1 to 3. In FIG. 4, the discharge curves of Example 1 and Comparative Example 1 almost overlap each other.

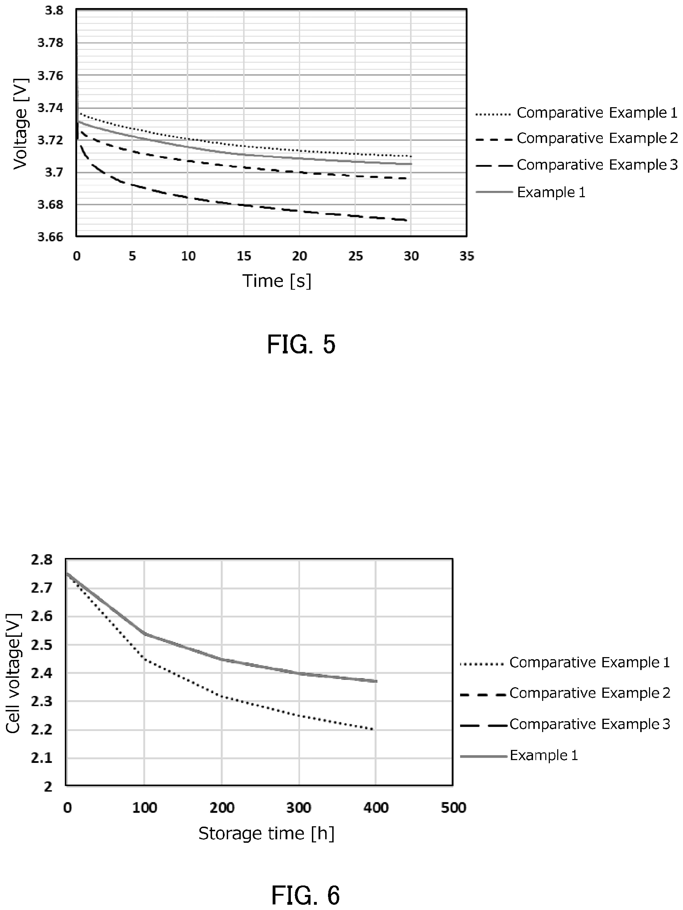

The batteries of Example 1 and Comparative Examples 1 to 3 were charged to a state of charge (SOC) of 50%. These batteries were subjected to a constant-current discharge for 30 seconds at a current value of 0.0016 A equivalent to a 1C rate. FIG. 5 is a graph showing the discharge voltage behavior of the batteries of Example 1 and Comparative Examples 1 to 3 at an SOC of 50%.

### <High-Temperature Storage Test>

A high-temperature storage test was conducted on the batteries of Example 1 and Comparative Examples 1 to 3 under the following conditions. The batteries of Example 1 and Comparative Examples 1 to 3 were stored at 125°C for 400 hours. Changes in terminal voltage of the batteries during the high-temperature storage were measured. FIG. 6 is a graph showing changes in voltage caused by high-temperature storage of the batteries of Example 1 and Comparative Examples 1 to 3. In FIG. 6, the plots of Example 1, Comparative Example 2, and Comparative Example 3 overlap each other.

### (Discussion)

From FIG. 4, it was confirmed that the battery of Example 1 had discharge characteristics comparable to or higher than those of the batteries of Comparative Examples 1 to 3. From FIG. 5, it was confirmed that the battery of Example 1 had better instantaneous output than the batteries of Comparative Examples 2 and 3. Regarding instantaneous output, no significant difference was observed between the battery of Example 1 and the battery of Comparative Example 1. From FIG. 6, it was confirmed that degradation caused by high-temperature storage was suppressed in the battery of Example 1 compared with that in the battery of Comparative Example 1. Regarding storage degradation, the battery of Example 1 exhibited performance comparable to that of the batteries of Comparative Examples 2 and 3. From the above, the battery of Example 1 exhibited both output characteristics and high-temperature resistance.

### INDUSTRIAL APPLICABILITY

The technique of the present disclosure is useful, for example, for all-solid-state secondary batteries.

## Claims

1. A positive electrode comprising:
a positive electrode current collector; and
a positive electrode mixture layer disposed on the positive electrode current collector, wherein
the positive electrode mixture layer comprises a positive electrode active material and a solid electrolyte,
the solid electrolyte comprises a first solid electrolyte material and a second solid electrolyte material,
the first solid electrolyte material has a higher ionic conductivity than the second solid electrolyte material,
the positive electrode mixture layer comprises a plurality of layers stacked in a thickness direction, and
when a first layer and a second layer among the plurality of layers are defined such that the first layer is closer to the positive electrode current collector than the second layer, a ratio of a volume of the first solid electrolyte material to a volume of the solid electrolyte in the second layer is greater than a ratio of a volume of the first solid electrolyte material to a volume of the solid electrolyte in the first layer.

2. The positive electrode according to claim 1, wherein
the second solid electrolyte material has a higher oxidation potential than the first solid electrolyte material.

3. A positive electrode comprising:
a positive electrode current collector; and
a positive electrode mixture layer disposed on the positive electrode current collector, wherein
the positive electrode mixture layer comprises a positive electrode active material and a solid electrolyte,
the solid electrolyte comprises a first solid electrolyte material and a second solid electrolyte material,
the second solid electrolyte material has a higher oxidation potential than the first solid electrolyte material,
the positive electrode mixture layer comprises a plurality of layers stacked in a thickness direction, and
when a first layer and a second layer among the plurality of layers are defined such that the first layer is closer to the positive electrode current collector than the second layer, a ratio of a volume of the first solid electrolyte material to a volume of the solid electrolyte in the second layer is greater than a ratio of a volume of the first solid electrolyte material to a volume of the solid electrolyte in the first layer.

4. The positive electrode according to any one of claims 1 to 3, wherein
the ratio of the volume of the first solid electrolyte material to the volume of the solid electrolyte in the first layer is 0% or more and 50% or less, and the ratio of the volume of the first solid electrolyte material to the volume of the solid electrolyte in the second layer is 50% or more and 100% or less.

5. The positive electrode according to any one of claims 1 to 3, wherein
the first layer and the second layer are adjacent to each other.

6. The positive electrode according to any one of claims 1 to 3, wherein
the plurality of layers are stacked in ascending order of the ratio of the volume of the first solid electrolyte material to the volume of the solid electrolyte in each of the plurality of layers, from a layer closest to the positive electrode current collector among the plurality of layers to a layer farthest from the positive electrode current collector among the plurality of layers.

7. A battery comprising:
the positive electrode according to any one of claims 1 to 3;
a negative electrode; and
an electrolyte layer disposed between the positive electrode and the negative electrode.
